# EUROPÄISCHE PATENTANMELDUNG

(11) **EP 0 637 573 A1**
(43) Veröffentlichungstag der Anmeldung: **08.02.1995**
(21) Anmeldenummer: 94112124.6
(22) Anmeldetag: 03.08.1994
(51) Int. Cl.: C03C 25/00, C03C 25/02, G02B 23/16, B08B 5/02

(54) **Vorrichtung zum Entfernen von an einem langgestreckten gut haftenden Partikel**

(30) Priorität: 06.08.1993 DE 4326435
(71) Anmelder: ROSENDAHL MASCHINEN-GESELLSCHAFT m.b.H., A-2345 Brunn am Gebirge (AT)
(72) Erfinder: Lysson, Hans-Jürgen, Dipl.-Ing., D-41352 Korschenbroich (DE); Bartling, Franz-Peter, Dipl.-Ing., D-40221 Düsseldorf (DE); Broden, Reiner, D-41063 Mönchengladbach (DE)
(74) Vertreter: Mende, Eberhard, Dipl.-Ing.

(57) **Zusammenfassung**

Eine Vorrichtung (1) zum Entfernen von an einem langgestreckten Gut (3) haftenden Partikeln weist eine Einlaufdüse (9) mit einer ersten Düsenbohrung (11) und eine Auslaufdüse (13) mit einer zweiten Düsenbohrung (15) auf. Die Einlaufdüse (9) ist in Durchlaufrichtung des langgestreckten Gutes (3) mit Abstand vor der Auslaufdüse (13) angeordnet, so daß dazwischen eine Spülkammer (17) gebildet ist. Die Querschnitte der Düsenbohrung (11; 15) sind an ihren engsten Stellen (12; 16) nur geringfügig größer als der Querschnitt des langgestreckten Gutes (3). Der Querschnitt der ersten Düsenbohrung (11) der Einlaufdüse (9) erweitert sich in Durchlaufrichtung des langgestreckten Gutes (3), während sich der Querschnitt der zweiten Düsenbohrung (15) der Auslaufdüse (13) in Durchlaufrichtung verjüngt. In die Spülkammer (17) ist durch zumindest einen einen Spülgaskanal (27) ein Spülgas zuführbar.

## Beschreibung

Die Erfindung geht aus von einer Vorrichtung zum Entfernen von an einem langgestreckten Gut haftenden Partikeln.

Beispielsweise bei der Beschichtung, dem Einfärben oder dem Signieren von Lichtwellenleitern oder bei der Herstellung von Lichtwellenleiter-Bändchen ist es erforderlich, zuvor an dem langgestreckten Gut anhaftende Partikel zu entfernen, die zu Aussetzern oder Störungen beim nachfolgenden Prozeß führen und die erzielbare Qualität verschlechtern können. Es sind bereits Abblasvorrichtungen zum Entfernen von an einem langgestreckten Gut haftenden Partikeln vorgeschlagen worden, die aber die Nachteile eines schlechten Wirkungsgrades und/oder einer Anregung des langgestreckten Gutes zu Schwingungen aufweisen. Darüber hinaus ist es bekannt, an einem langgestreckten Gut haftende Partikel mit Bürsten, Pinseln oder ähnlichem abzustreifen.

Mit solchen Vorrichtungen und Verfahren kann aber nicht sichergestellt werden, daß alle an dem langgestreckten Gut haftenden Partikel zuverlässig entfernt werden und dabei eine Beschädigung des langgestreckten Gutes, z. B. eines empfindlichen Lichtwellenleiters, vermieden wird.

Ausgehend von diesem Stand der Technik liegt der Erfindung das Problem zugrunde, auf sichere und zuverlässige Art und Weise die an einem langgestreckten Gut haftenden Partikel zu entfernen, ohne daß dabei die Gefahr einer Beschädigung des langgestreckten Gutes besteht.

Dieses Problem wird erfindungsgemäß gelöst, indem eine Einlaufdüse mit einer ersten Düsenbohrung und eine Auslaufdüse mit einer zweiten Düsenbohrung vorgesehen sind, durch die das langgestreckte Gut hindurchführbar ist. Die Einlaufdüse ist in Durchlaufrichtung des langgestreckten Gutes mit Abstand vor der Auslaufdüse angeordnet. Die Querschnitte der Düsenbohrungen an ihren engsten Stellen sind nur geringfügig größer als der Querschnitt des langgestreckten Gutes. Dabei erweitert sich der Querschnitt der ersten Düsenbohrung der Einlaufdüse in Durchlaufrichtung des langgestreckten Gutes, während sich der Querschnitt der zweiten Düsenbohrung der Auslaufdüse in Durchlaufrichtung des langgestreckten Gutes verjüngt. Zwischen der Einlaufdüse und der Auslaufdüse ist eine Spülkammer gebildet, in die durch zumindest einen Spülgaskanal ein Spülgas zuführbar ist.

Die mit der Erfindung erzielbaren Vorteile bestehen insbesondere darin, daß beim Durchlauf des langgestreckten Gutes durch die erfindungsgemäße Vorrichtung auf sichere und zuverlässige und dabei einfache Art und Weise die an dem langgestreckten Gut haftenden Partikel berührungslos entfernt werden. Das Spülgas kann mit hohem Wirkungsgrad und turbulenzarm geführt werden, ohne daß das langgestreckte Gut zu Schwingungen angeregt wird. Die erfindungsgemäße Vorrichtung eignet sich insbesondere für die Signierung und Beschichtung von Lichtwellenleitern sowie für die Bändchenherstellung.

Durch die in den Unteransprüchen aufgeführten Maßnahmen sind vorteilhafte Weiterbildungen und Verbesserungen der Erfindung möglich.

Für eine besonders wirkungsvolle und turbulenzarme Führung des Spülgasstromes durch die erfindungsgemäße Vorrichtung ist es von Vorteil, wenn die Vorrichtung in Durchlaufrichtung des langgestreckten Gutes vor der Einlaufdüse über zumindest einen Absaugkanal mit einer Absaugeinrichtung in Verbindung steht.

Aus dem gleichen Grund ist es von Vorteil, wenn in der Spülkammer zwischen der Einlaufdüse und der Auslaufdüse ein sich in Durchlaufrichtung des langgestreckten Gutes erstreckender Verteilerring mit durch seine Wandung hindurchgehenden Zufuhrbohrungen für das Spülgas angeordnet ist. Durch einen solchen Verteilerring läßt sich das Spülgas mit einer gewünschten Verteilung und Richtung in die Spülkammer einbringen.

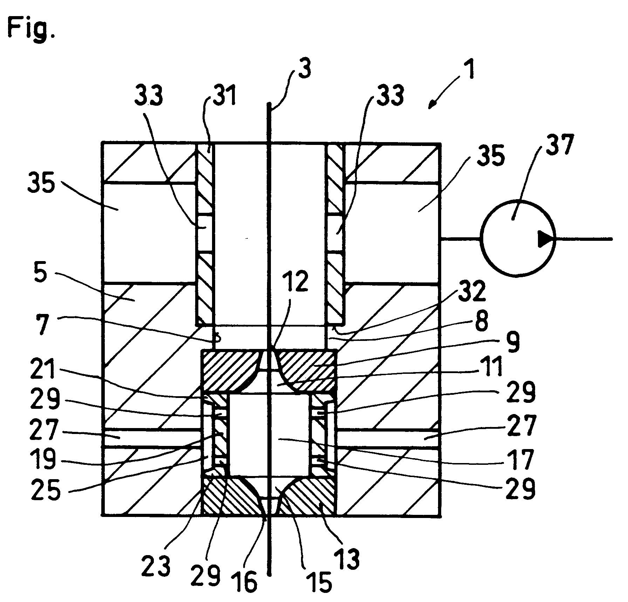

Ein Ausführungsbeispiel der Erfindung ist in der Zeichnung vereinfacht dargestellt und in der nachfolgenden Beschreibung näher erläutert.

In der Fig. ist beispielhaft eine Vorrichtung 1 zum Entfernen von an einem langgestreckten Gut 3 wie z. B. einer optischen Faser haftenden Partikeln dargestellt. Die Vorrichtung 1 weist beispielsweise ein zylindrisches Gehäuse 5 mit einer durchgehenden, gestuften Längsbohrung 7 auf. In der Längsbohrung 7 ist eine z. B. in der Durchlaufrichtung des langgestreckten Gutes 3 entgegengesetzter Richtung an einem in radialer Richtung nach innen weisenden Halteabsatz 8 der gestuften Längsbohrung 7 anliegende Einlaufdüse 9 mit einer ersten Düsenbohrung 11 angeordnet, durch die das langgestreckte Gut 3 hindurchführbar ist. Die erste Düsenbohrung 11 ist dabei beispielsweise so ausgeformt, daß sie sich in Durchlaufrichtung des langgestreckten Gutes 3 ausgehend von ihrer engsten Stelle 12 am Eintritt des langgestreckten Gutes 3 in die Einlaufdüse 9 trichterförmig erweitert. In Durchlaufrichtung des langgestreckten Gutes 3 durch die Vorrichtung 1 mit Abstand hinter der Einlaufdüse 9 ist eine Auslaufdüse 13 angeordnet, durch deren zweite Düsenbohrung 15 das langgestreckte Gut 3 hindurchführbar ist. Der Querschnitt der zweiten Düsenbohrung 15 verjüngt sich in Durchlaufrichtung des langgestreckten Gutes 3 und hat z. B. an dem der Einlaufdüse 9 abgewandten Ende der zweiten Düsenbohrung 15 seine engste Stelle 16. Dabei sind die Querschnitte der Düsenbohrungen 11 bzw. 15 an ihren engsten Stellen 12 bzw. 16 nur geringfügig größer als der Querschnitt des langgestreckten Gutes 3. Einlaufdüse 9 und Auslaufdüse 13 können beispielsweise in die Längsbohrung 7 eingepresst sein.

Handelt es sich z. B. bei dem langgestreckten Gut 3 um eine mit einer Beschichtung versehene optische Faser mit einem Durchmesser von 250 µm, so weisen die erste Düsenbohrung 11 sowie die zweite Düsenbohrung 15 an ihren engsten Stellen 12 bzw. 16 einen Durchmesser von beispielsweise etwa 300 µm auf. Auf diese Weise wird durch die sich in Durchlaufrichtung der Faser 1 ausgehend von ihrer engsten Stelle 12 trichterförmig erweiternde erste Düsenbohrung 11 der Einlaufdüse 9 die von dem langgestreckten Gut 3 mitgeführte partikelbehaftete Raumluft besonders wirkungsvoll und zuverlässig abgestreift, ohne daß die Gefahr einer Berührung des langgestreckten Gutes 3 besteht.

Unterstützt wird dieser Effekt durch die Zuführung eines Spülgases in eine in Durchlaufrichtung des langgestreckten Gutes 3 zwischen der Einlaufdüse 9 und der Auslaufdüse 13 gebildete Spülkammer 17. In der Spülkammer 17 ist zwischen der Einlaufdüse 9 und der Auslaufdüse 13 ein sich in Durchlaufrichtung des langgestreckten Gutes 3 erstreckender Verteilerring 19 angeordnet, der sich mit einem in radialer Richtung nach außen weisenden, z. B. an der Einlaufdüse 9 anliegenden oberen Haltebund 21 sowie mit einem in radialer Richtung nach außen weisenden, beispielsweise an der Auslaufdüse 13 anliegenden unteren Haltebund 23 an der Wandung der Längsbohrung 7 des Gehäuses 5 abstützt. Auf diese Weise ist in radialer Richtung zwischen der Wandung der Längsbohrung 7 und dem Umfang des Verteilerringes 19 sowie in axialer Richtung zwischen dem oberen Haltebund 21 und dem unteren Haltebund 23 eine ringförmige Zwischenkammer 25 gebildet.

In dem Gehäuse 5 sind beispielsweise zwei einander gegenüberliegende Spülgaskanäle 27 ausgebildet, durch die das Spülgas in die ringförmige Zwischenkammer 25 zuführbar ist. Der Verteilerring 19 hat beispielsweise vier Zufuhrbohrungen 29, von denen z. B. jeweils zwei einander gegenüberliegend in der Ebene der Spülgaskanäle 27 ausgebildet sind. Durch die Zufuhrbohrungen 29 kann das Spülgas von der Zwischenkammer 25 in die Spülkammer 17 strömen. Bei dem in der Fig. dargestellten Ausführungsbeispiel verlaufen die Zufuhrbohrungen 29 beispielsweise senkrecht zu der Durchlaufrichtung des langgestreckten Gutes 3, sie können aber auch gegenüber dieser Durchlaufrichtung schräg geneigt ausgebildet sein.

An dem der Auslaufdüse 13 abgewandten Ende ist z. B. in die gestufte Längsbohrung 7 des Gehäuses 5 eine Hülse 31 eingesetzt. Die Hülse 31 liegt beispielsweise mit ihrem Umfang an der Wandung der Längsbohrung 7 und mit einer der Einlaufdüse 9 zugewandten Stirnseite 32 an dem Halteabsatz 8 der Längsbohrung 7 an und wird von dem langgestreckten Gut 3 durchlaufen. In der Wandung der Hülse 31 sind beispielsweise zwei einander gegenüberliegende Absaugöffnungen 33 ausgebildet. In Durchlaufrichtung des langgestreckten Gutes 3 in Höhe der Absaugöffnungen 33 sind in dem Gehäuse 5 z. B. zwei mit den Absaugöffnungen 33 in Verbindung stehende Absaugkanäle 35 vorgesehen, die ihrerseits mit einer gemeinsamen Absaugeinrichtung 37 in Verbindung stehen. Durch die Absaugöffnungen 33 und die Absaugkanäle 35 hindurch kann auf diese Weise aus der Längsbohrung 7 des Gehäuses 5 vor der Einlaufdüse 9 von dem langgestreckten Gut 3 mitgeführte partikelbehaftete Raumluft sowie durch die erste Düsenbohrung 11 der Einlaufdüse 9 aus der Spülkammer 17 ausgetretenes Spülgas mittels der Absaugvorrichtung 37 abgesaugt werden.

Das in die Spülkammer 17 eingebrachte Spülgas weist aufgrund der Geometrie des Verteilerringes 19 und der Einlaufdüse 9 z. B. sowohl eine axial als auch eine radial auf das langgestreckte Gut 3 gerichtete Komponente auf. Das langgestreckte Gut 3 wird in Durchlaufrichtung hinter der Auslaufdüse 13 von dem partikelfreien Spülgas umhüllt, so daß eine Störung des nachfolgenden Prozeßschrittes wie z. B. des Umwickelns, des Aufbringens eines Mantels oder Schirmes, des Signierens oder des Herstellens eines Bändchens aufgrund von an dem langgestreckten Gut 3 haftenden Partikeln ausgeschlossen ist.

## Patentansprüche

1. Vorrichtung zum Entfernen von an einem langgestreckten Gut haftenden Partikeln, dadurch gekennzeichnet, daß
- eine Einlaufdüse (9) mit einer ersten Düsenbohrung (11) und eine Auslaufdüse (13) mit einer zweiten Düsenbohrung (15) vorgesehen sind, durch die das langgestreckte Gut (3) hindurchführbar ist,
- die Einlaufdüse (9) in Durchlaufrichtung des langgestreckten Gutes (3) mit Abstand vor der Auslaufdüse (13) angeordnet ist,
- die Querschnitte der Düsenbohrungen (11; 15) an ihren engsten Stellen (12; 16) nur geringfügig größer als der Querschnitt des langgestreckten Gutes (3) sind,
- der Querschnitt der ersten Düsenbohrung (11) der Einlaufdüse (9) sich in Durchlaufrichtung des langgestreckten Gutes (3) erweitert und der Querschnitt der zweiten Düsenbohrung (15) der Auslaufdüse (13) sich in Durchlaufrichtung des langgestreckten Gutes (3) verjüngt,
- zwischen der Einlaufdüse (9) und der Auslaufdüse (13) eine Spülkammer (17) gebildet ist, in die durch zumindest einen Spülgaskanal (27) ein Spülgas zuführbar ist.

2. Vorrichtung nach Anspruch 1, dadurch gekennzeichnet, daß die Vorrichtung (1) in Durchlaufrichtung des langgestreckten Gutes (3) vor der Einlaufdüse (9) über zumindest einen Absaugkanal (35) mit einer Absaugeinrichtung (37) in Verbindung steht.

3. Vorrichtung nach Anspruch 1 oder 2, dadurch gekennzeichnet, daß in der Spülkammer (17) ein sich in Durchlaufrichtung des langgestreckten Gutes (3) erstreckender Verteilerring (19) mit durch seine Wandung hindurchgehenden Zufuhrbohrungen (29) für das Spülgas angeordnet ist.
